# FASCICULE DE BREVET EUROPEEN

(11) **EP 0 512 049 B1**
(45) Date de publication et mention de la délivrance du brevet: **14.12.1994**
(21) Numéro de dépôt: 91903808.3
(22) Date de dépôt: 21.01.1991
(51) Int. Cl.: F16B 5/04, F16B 19/10

(54) **PROCEDE D'ASSEMBLAGE DE MATERIAUX ET ORGANE DE RIVETAGE POUR SA MISE EN OEUVRE**
VERFAHREN ZUM VERBINDEN VON TEILEN UND DAFÜR VERWENDETES NIETELEMENT
METHOD AND RIVETING DEVICE FOR ASSEMBLING MATERIALS

(30) Priorité: 26.01.1990 FR 9001372
(43) Date de publication de la demande: 11.11.1992
(73) Titulaire: ATELIERS DE LA HAUTE-GARONNE - ETABLISSEMENTS AURIOL & Cie S.a.R.L., F-31130 Balma (FR); Auriol, Jean-Marc, F-31130 Balma (FR); Bornes, Philippe, F-31130 Balma (FR)
(72) Inventeur: AURIOL, Jean-Marc, F-31130 Balma (FR); BORNES, Philippe, F-31130 Blalma (FR)
(74) Mandataire: Cabinet BARRE LAFORGUE & associés
(86) Numéro de dépôt international: FR9100037
(87) Numéro de publication internationale: WO9111625

(56) Documents cités:
- EP-A- 0 216 405
- AT-B- 192 194
- DE-U- 6 925 101
- FR-A- 2 306 361
- US-A- 4 221 041

## Description

L'invention concerne un procédé d'assemblage de matériaux, applicable aussi bien pour assembler des matériaux durs notamment en alliage léger, que des matériaux tendres ou fragiles, notamment matériaux synthétiques laminés renforcés par des fibres (souvent désignés par "matériaux composites"). L'invention s'étend à un organe de rivetage servant à la mise en oeuvre dudit procédé.

On connaît des organes de rivetage essentiellement composés de deux pièces : un mandrin possédant une tige et une tête, et une douille appelée à contenir la tige de mandrin et à être déformée par sa tête afin de constituer une tête de fixation postformée d'un côté des matériaux. On pourra par exemple se reporter au brevet FR 2.306.361 qui décrit un organe de rivetage de ce type. Toutefois, les organes connus de ce type ne sont pas adaptés aux matériaux tendres ou fragiles : en effet, lors du rivetage, la douille subit à son extrémité une expansion radiale importante (pour créer la tête postformée), susceptible d'endommager gravement ce type de matériaux dans la zone située sous ladite tête postformée, avec des risques de délaminage et de décollement des fibres. En outre, quels que soient les matériaux assemblés, la portée de fixation créée par la tête postformée présente une direction générale longitudinale et est de dimensions réduites de sorte que la tenue de la fixation est médiocre.

Par ailleurs, le document EP-A-0.216.405 décrit en référence à ses figures 7 à 10 un procédé de rivetage aveugle, c'est-à-dire un procédé de rivetage dans lequel l'accès s'effectue par un seul côté des matériaux à riveter et qui s'achève par une rupture du mandrin grâce à une traction appropriée exercée sur celui-ci. Ce procédé évite de blesser les matériaux au niveau de la tête post-formée mais il est soumis aux servitudes des procédés aveugles (en particulier à celles liées à l'obligation de rompre la tige de mandrin en fin de rivetage) et conduit à un assemblage de moins bonne résistance. De plus, ce procédé ne permet en aucun cas d'introduire des contraintes radiales de compression entre la douille et les matériaux à riveter sans endommager ces derniers ; dans beaucoup d'applications, ces contraintes de compression sont recherchées pour accroître la tenue en fatigue de l'assemblage.

La présente invention se propose de fournir un nouveau procédé de rivetage qui puisse être utilisé pour tout matériau sans risque de blessure dans le cas de matériaux fragiles, et qui conduise à une excellente tenue de la fixation (cisaillement, traction, tenue en fatigue).

Un autre objectif de l'invention est de permettre la réalisation d'un assemblage fraisé/fraisé, avec un bon désaffleurement, et ce sans avoir à pratiquer un arasage de l'organe de rivetage.

A cet effet, le procédé d'assemblage visé par l'invention utilise un organe de rivetage du type comprenant, d'une part, un mandrin possédant une tige et une tête, d'autre part, une douille adaptée pour contenir la tige de mandrin et possédant une extrémité tubulaire apte à être déformée par la tête de mandrin en vue de constituer une tête postformée d'un côté des matériaux à assembler ; conformément à la présente invention, ledit procédé consiste :
. à réaliser dans les matériaux à assembler un trou possédant une fraisure sur au moins un côté desdits matériaux,
. à utiliser une douille dont l'extrémité tubulaire est dotée sur sa surface externe d'un décrochement périphérique formant une zone de pliage prolongée vers l'extrémité libre de la douille par une zone d'accostage, ledit décrochement périphérique étant positionné le long de la douille de façon à dégager la naissance de la fraisure du trou lorsque la douille est enfoncée dans ledit trou,
. à utiliser un mandrin dont la tête est dotée d'une sous-face de diamètre décroissant en direction de la tige, apte à déformer l'extrémité tubulaire de la douille et à replier celle-ci au niveau de sa zone de pliage,
. à introduire la douille dans le trou de sorte que son extrémité tubulaire pourvue du décrochement périphérique soit située du côté de la fraisure, la zone de pliage s'étendant de part et d'autre de la naissance de ladite fraisure, ladite douille étant introduite seule dans le trou en l'absence du mandrin,
. à maintenir la douille dans le trou au moyen d'un piston creux disposé en appui contre ladite douille du côté opposé à la fraisure précitée,
. puis à présenter le mandrin du côté des matériaux où se trouve la fraisure, en regard de l'extrémité tubulaire de la douille pourvue du décrochement périphérique,
. à introduire et enfoncer le mandrin dans la douille par l'extrémité tubulaire de celle-ci,
. à assurer au moyen d'un tas une pression sur la tête de mandrin de façon à amener ladite tête à déformer l'extrémité tubulaire de la douille, la sous-face de ladite tête assurant un repliage centrifuge de l'extrémité de douille amenant au moins en partie la surface d'accostage de celle-ci au contact des matériaux à l'intérieur de la fraisure,
. à sertir le mandrin dans la douille.

Ainsi, lors du rivetage, le décrochement périphérique préserve la naissance de la fraisure de toute sollicitation et la tête de fixation est formée par pliage de la douille au niveau de la zone de pliage de la douille (et non par expansion comme c'est le cas dans l'organe décrit dans le brevet FR 2.306.361) : ceci évite de blesser les matériaux sous la tête postformée et permet de réaliser une portée de grande dimension, parfaitement appliquée contre les matériaux. Le décrochement précité est avantageusement formé par une gorge périphérique ménagée autour de la douille. Il peut aussi être constitué par un épaulement.

La longueur de la douille peut être adaptée de façon que, après pliage, l'extrémité libre de celle-ci vienne sensiblement affleurer la bordure externe de la fraisure du trou ; on obtient ainsi un bon désaffleurement du côté de la tête postformée sans avoir à pratiquer un arasage (cette opération étant très dangereuse en raison de la fragilisation de l'assemblage qu'elle peut susciter).

Le procédé de l'invention s'applique en particulier pour obtenir un assemblage fraisé/fraisé ; l'on utilise alors une douille possédant une tête préformée qui vient se loger, lors du rivetage, dans une fraisure correspondante qui est pratiquée dans les matériaux (à l'opposé de la fraisure destinée à la tête postformée). Il est possible d'obtenir, sans arasage, un bon désaffleurement du côté de la tête préformée en prévoyant un mandrin qui dépasse de la tête préformée et en amenant lors du sertissage cette partie dépassante à fluer et s'épanouir dans l'âme creuse de ladite tête préformée, laquelle peut être pourvue à cet effet d'une petite fraisure.

Par ailleurs pour accroître la tenue en fatigue de l'assemblage, le procédé de l'invention peut être mis en oeuvre en utilisant un mandrin dont la tige présente un diamètre externe supérieur a l'alésage de la douille en vue d'engendrer un gonflement de la douille lors de l'introduction du mandrin et une pression radiale entre douille et matériaux à assembler. Un tel gonflement introduit entre douille et matériaux des contraintes radial es de compression qui améliorent considérablement la tenue en fatigue de l'assemblage. De plus, dans le cas de matériaux conducteurs, un tel gonflement améliore également la continuité électrique. Il est à noter que la douille utilisée possède de préférence un diamètre externe correspondant sensiblement à l'alésage du trou : le gonflement est ainsi réalisé uniquement lors de l'introduction du mandrin sans risque de grippage ou d'arrachement à l'interface douille/matériaux. Dans le cas de matériaux en alliage léger, le mandrin est avantageusement prévu pour engendrer un gonflement de valeur comprise entre environ 0,1 et 0,4 mm ; dans le cas de matériaux composites, la valeur du gonflement sera plus réduite et limitée entre 0,05 mm et 0,2 mm environ afin d'écarter les risques de délaminage.

L'invention s'étend à un organe de rivetage permettant la mise en oeuvre du procédé sus-défini. Cet organe comprend d'une part, un mandrin possédant une tige et une tête, d'autre part, une douille adaptée pour contenir la tige de mandrin et possédant une extrémité tubulaire apte à être déformée par la tête de mandrin, la douille possédant une extrémité tubulaire dotée sur sa surface externe d'un décrochement périphérique formant une zone de pliage prolongée vers l'extrémité libre par une zone d'accostage, le mandrin possédant une tête dotée d'une sous-face de diamètre décroissant en direction de la tige apte à déformer l'extrémité tubulaire de la douille et à replier celle-ci au niveau de sa zone de pliage, le diamètre externe du mandrin étant ajusté de façon à excéder l'alésage de la douille d'une valeur comprise entre 0,05 mm et 0,3 mm.

L'invention ayant été exposée dans sa forme générale, d'autres caractéristiques, buts et avantages ressortiront de la description qui suit en référence aux dessins annexés qui présentent, à titre d'exemple non limitatif, un mode de réalisation d'organe de rivetage conforme à l'invention et un mode de mise en oeuvre du procédé d'assemblage ; sur ces dessins qui font partie intégrante de la présente description :
- les figures 1 et 2 sont des vues en coupes axiales à échelle dilatée, respectivement d'une douille et d'un mandrin constitutifs de l'organe de rivetage visé,
- les figures 3 à 8 illustrent en coupe le procédé d'assemblage de matériaux au moyen dudit organe,
- la figure 9 est une coupe de l'assemblage obtenu.

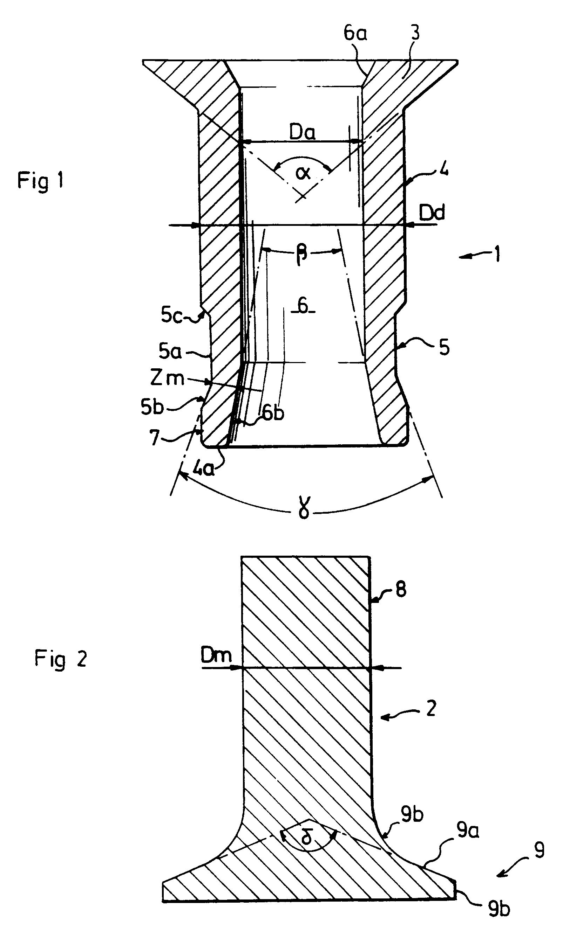

L'organe de rivetage représenté à titre d'exemple aux figures 1 et 2 est composé d'une douille 1 (figure 1) qui peut notamment être fabriquée en titane (T40) afin de bénéficier des caractéristiques de déformabilité de ce matériau, et d'un mandrin 2 (figure 2) qui peut notamment être fabriqué en acier inoxydable (acier austénitique) afin de bénéficier de bonnes caractéristiques mécaniques. De plus, ces matières sont parfaitement compatibles avec la plupart de matériaux à assembler (alliages légers, matériaux composites...).

La douille 1 comprend, d'une part, une tête préformée fraisée 3 ayant une forme tronconique, d'angle de conicité α en l'exemple de l'ordre de 100°, d'autre part, un fût tubulaire cylindrique 4 de diamètre externe Dd dont l'extrémité opposée à la tête 3 est pourvue d'un décrochement périphérique constitué par une gorge 5. L'âme creuse 6 de la douille présente un alésage qui est de forme cylindrique sur sa plus grande longueur (diamètre Da), avec une petite fraisure 6a au niveau de la tête 3 et un tronçon 6b de forme tronconique à l'extrémité tubulaire opposée ; l'angle de conicité β de ce tronçon est en l'exemple de l'ordre de 15°. Ce tronçon s'étend jusqu'au niveau de la gorge 5 de façon à définir une zone de moindre épaisseur Zm à proximité de la naissance de ladite gorge, l'épaisseur de la douille croissant ensuite progressivement depuis cette zone vers le coeur de la gorge ; est ainsi réalisée une zone de pliage progressif de la douille s'étendant de la zone Zm vers le coeur de la gorge.

Dans le mode de réalisation préférentiel représenté, le fond 5a de la gorge est cylindrique, d'axe confondu avec l'axe de la douille, et ses flancs 5b et 5c sont tronconiques, le flanc 5b ayant un angle de conicité γ plus faible (de l'ordre de 40°) et se raccordant avec une surface cylindrique 7 située à l'extrémité de la douille. Ce flanc conique 5b et son prolongement cylindrique 7 forment une surface d'accostage appelée à venir en partie ou en totalité au contact des matériaux à assembler lors du rivetage. La surface d'accostage cylindrique 7 et le tronçon tronconique 6b se raccordent au chant extrême 4a de la douille par des parties arrondies.

Par ailleurs, le mandrin 2 qui est appelé à pénétrer dans la douille 1 lors du rivetage comprend une tige pleine cylindrique 8 de diamètre Dm et une tête 9 possédant une sous-face 9a et un court listel cylindrique 9b.

Le diamètre Dm de la tige 8 est supérieur à l'alésage Da de la douille 1 afin d'engendrer un gonflement de celle-ci lors du rivetage. La différence de ces diamètres est fonction de l'application et sera comprise entre 0,1 mm et 0,4 mm pour l'assemblage de matériaux en alliage léger d'aluminium, et entre 0,05 mm et 0,2 mm pour l'assemblage de matériaux composites.

La sous-face 9a présente une forme tronconique, d'angle de conicité δ en l'exemple de l'ordre de 135° ; elle se raccorde à la tige par un arrondi 9b qui assure un pliage progressif de l'extrémité tubulaire de douille lors du rivetage.

La longueur de la tige de mandrin est ajustée de sorte que ladite tige dépasse de la naissance de la fraisure 6a de la douille en fin d'introduction, cette longueur de dépassement étant suffisamment faible pour que la matière puisse venir par fluage se loger dans cette fraisure 6a de la douille lors du sertissage. En l'exemple, une longueur de dépassement de l'ordre de 0,5 à 1 mm donne de bons résultats et permet d'obtenir un bon désaffleurement du côté de la tête préformée.

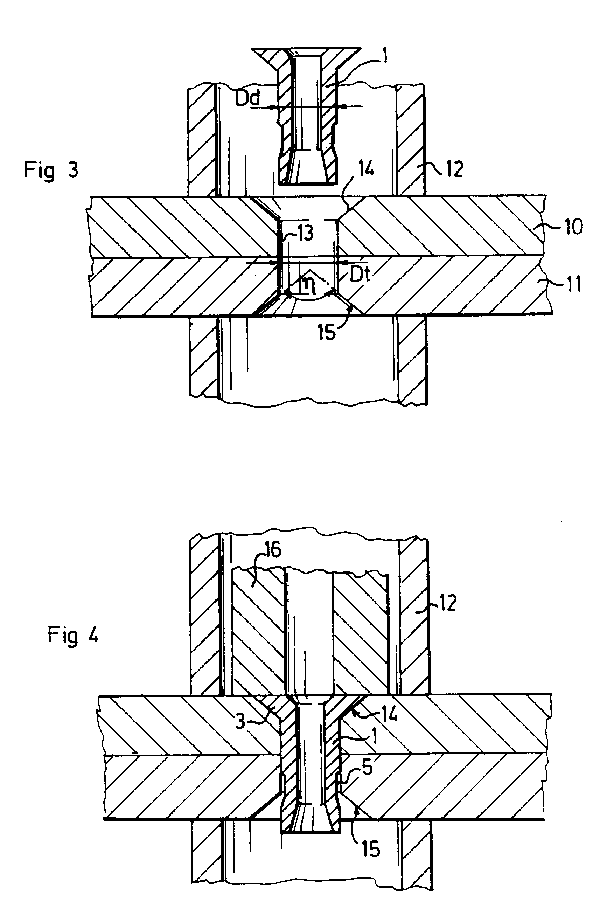

Les figures 3 à 8 illustrent le procédé d'assemblage de matériaux au moyen de l'organe de rivetage décrit ci-dessus.

Ces matériaux peuvent par exemple être constitués par des feuilles 10 et 11 de matériaux synthétiques laminés renforcés par des fibres (figure 3). Ces feuilles sont maintenues de façon traditionnelle par des serre-flancs 12 et sont percées d'un trou cylindrique 13 avec fraisurage de chaque côté pour réaliser deux fraisures identiques 14 et 15 dont l'angle de conicité η est en l'exemple de l'ordre de 100°. L'alésage du trou Dt correspond au diamètre externe Dd de la douille 1 (jeu inférieur à 0,05 mm).

L'on utilise une douille 1 de longueur supérieure à l'épaisseur des matériaux à assembler, ajustée de sorte que l'extrémité tubulaire de douille dépasse des matériaux d'une longueur de l'ordre de 0,5 à 1,25 mm telle que l'extrémité libre de douille vienne sensiblement affleurer la bordure externe de la fraisure 15 en fin de pliage.

L'on introduit la douille 1 dans le trou des matériaux jusqu'à loger sa tête préformée 3 dans la fraisure correspondante 14 du trou (figure 4). La gorge périphérique 5 de la douille a été réalisée sur la douille de façon à s'étendre, dans cette position, de part et d'autre de la naissance de la fraisure 15.

La douille 1 est maintenue dans cette position au moyen d'un piston creux 16 qui est disposé en appui contre la face frontale de sa tête préformée 3, comme le représente la figure 4.

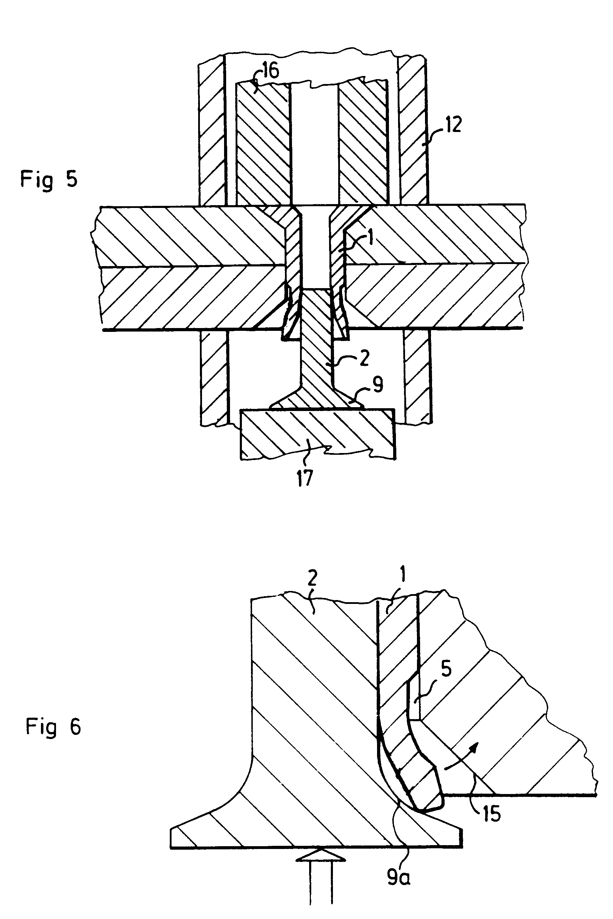

Le mandrin est alors présenté du côté opposé à la tête préformée de douille et introduit dans celle-ci (figure 5). Dans le cas de matériaux composites, le mandrin choisi présente une tige déterminant un faible gonflement de la douille (entre 0,05 mm et 0,2 mm).

Le mandrin est enfoncé dans la douille au moyen d'un tas 17 (piston plein) ; cette pénétration assure le gonflement de la douille et l'apparition de contraintes de compression à l'interface entre douille et matériaux composites. Il est à noter que ces contraintes sont strictement radiales et ne déterminent aucun endommagement des matériaux compte-tenu des valeurs de gonflement précitées ; en fin de pénétration, la tête du mandrin vient au contact de la douille et réalise une déformation de son extrémité tubulaire : la sous-face 9a de ladite tête assure un repliage centrifuge de cette extrémité, repliage qui s'amorce dans la zone de moindre épaisseur définie par la gorge périphérique 5 et s'étend progressivement le long de celle-ci. La figure 6 illustre ce pliage progressif de la douille. Il est à noter que les matériaux composites ne sont pas sollicités pendant ce pliage, en particulier au niveau de la fraisure 15 et de sa naissance lesquelles demeurent sans contact avec la douille.

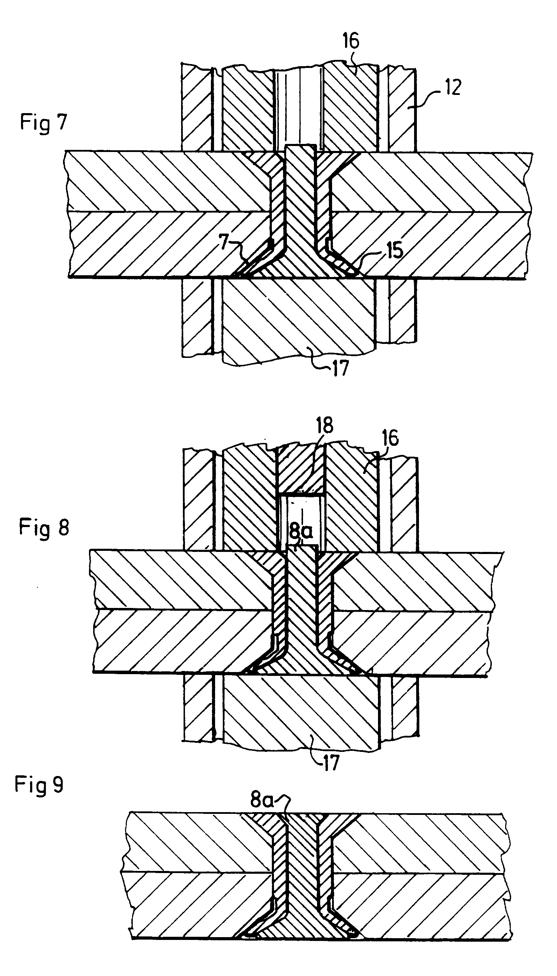

Le mandrin est enfoncé dans la douille jusqu'à amener la surface d'accostage de cette dernière au contact des matériaux à assembler à l'intérieur de la fraisure 15 (figure 7). Dans le cas de matériaux composites, le repliage est réalisé de façon à réaliser une pression modérée entre douille et matériaux afin de ne pas blesser ces derniers ; dans ce cas, seule la surface d'accostage cylindrique 7 vient au contact des matériaux. Dans le cas de matériaux métalliques notamment en alliage léger, cette pression peut être prévue plus élevée, une partie ou la totalité de la surface d'accostage tronconique 5b (flanc de la gorge 5) venant alors en appui contre les matériaux à assembler.

Le mandrin est ensuite serti dans la douille au moyen d'un poinçon 18 qui écrase la partie dépassante de la tige de mandrin et réalise un fluage de la matière de celle-ci vers la petite fraisure 6a de la douille (figure 8).

Le procédé de l'invention conduit à un assemblage tel que schématisé à la figure 9, bénéficiant d'un bon désaffleurement des deux côtés sans qu'il soit besoin de pratiquer des opérations d'arasage. Cet assemblage bénéficie d'excellentes qualités mécaniques en raison de la présence du mandrin en acier inoxydable en compression à l'intérieur de la douille (tenue au cisaillement supérieure de 30 à 60 % par rapport à celle des rivets pleins en alliage léger, tenue à la traction et à la tension installée supérieure d'environ 10 à 15 %, excellente tenue à la fatigue). Des examens micrographiques de coupes de l'assemblage ont confirmé que les feuilles de matériaux composites ne sont pas blessées par le rivetage.

## Revendications

1. Procédé d'assemblage de matériaux au moyen d'un organe de rivetage du type comprenant, d'une part, un mandrin (2) possédant une tige (8) et une tête (9), d'autre part, une douille (1) adaptée pour contenir la tige de mandrin et possédant une extrémité tubulaire apte à être déformée par la tête de mandrin en vue de constituer une tête postformée d'un côté des matériaux à assembler, ledit procédé d'assemblage étant caractérisé en ce qu'il consiste :
. à réaliser dans les matériaux à assembler un trou (13) possédant une fraisure (15) sur au moins un côté desdits matériaux,
. à utiliser une douille (1) dont l'extrémité tubulaire est dotée sur sa surface externe d'un décrochement périphérique (5) formant une zone de pliage prolongée vers l'extrémité libre de la douille par une zone d'accostage (5b, 7), ledit décrochement périphérique étant positionné le long de la douille de façon à dégager la naissance de la fraisure (15) du trou lorsque la douille est enfoncée dans ledit trou,
. à utiliser un mandrin (2) dont la tête (9) est dotée d'une sous-face (9a) de diamètre décroissant en direction de la tige, apte à déformer l'extrémité tubulaire de la douille et à replier celle-ci au niveau de sa zone de pliage,
. à introduire la douille (1) dans le trou (13) de sorte que son extrémité tubulaire pourvue du décrochement périphérique (5) soit située du côté de la fraisure (15), la zone de pliage s'étendant de part et d'autre de la naissance de ladite fraisure, ladite douille étant introduite seule dans le trou en l'absence du mandrin,
. à maintenir la douille (1) dans le trou (13) au moyen d'un piston creux (16) disposé en appui contre ladite douille du côté opposé à la fraisure (15) précitée,
. puis à présenter le mandrin du côté des matériaux où se trouve la frai sure (15), en regard de l'extrémité tubulaire de la douille pourvue du décrochement périphérique,
. à introduire et enfoncer le mandrin (2) dans la douille (1) par l'extrémité tubulaire de celle-ci,
. à assurer au moyen d'un tas (17) une pression sur la tête de mandrin de façon à amener ladite tête à déformer l'extrémité tubulaire de la douille, la sous-face (9a) de ladite tête assurant un repliage centrifuge de l'extrémité de douille amenant au moins en partie la surface d'accostage de celle-ci au contact des matériaux à l'intérieur de la fraisure (15),
. à sertir le mandrin (2) dans la douille (1).

2. Procédé d'assemblage selon la revendication 1, dans lequel l'on utilise un mandrin dont la tête (9) est dotée d'une sous-face (9a) de forme tronconique se raccordant à la tige par un arrondi (9b), l'angle de conicité (δ) de ladite sous-face étant supérieur à l'angle de conicité de la fraisure du trou.

3. Procédé d'assemblage selon l'une des revendications 1 ou 2, dans lequel l'on utilise une douille dont l'extrémité tubulaire possède une âme creuse (6) pourvue d'un tronçon de forme tronconique (6b) s'étendant jusqu'au niveau de la zone de pliage (5).

4. Procédé d'assemblage selon l'une des revendications 1, 2 ou 3, dans lequel l'on utilise une douille présentant une zone d'accostage au moins en partie cylindrique (7).

5. Procédé d'assemblage selon l'une des revendications 1, 2, 3 ou 4, dans lequel l'on utilise une douille (1) dont le décrochement est formé par une gorge périphérique (5).

6. Procédé d'assemblage selon la revendication 5, caractérisé en ce que l'on utilise une douille présentant une zone d'accostage au moins en partie tronconique (5b) constituée par le flanc extrême de la gorge périphérique (5).

7. Procédé d'assemblage combinant les caractéristiques des revendications 2 et 3, dans lequel :
. l'on réalise dans les matériaux un trou (13) dont la fraisure (15) présente un angle de conicité (η) de l'ordre de 100°,
. l'on utilise une douille dont l'âme creuse (6) présente un tronçon tronconique (6b) d'angle de conicité (β) de l'ordre de 15°,
. l'on utilise un mandrin dont la tête (9) présente une sous-face (9a) d'angle de conicité (δ) de l'ordre de 135°.

8. Procédé d'assemblage selon l'une des revendications précédentes, caractérisé en ce que :
. l'on utilise une douille (1) de diamètre externe cylindrique (Dd) correspondant sensiblement à l'alésage du trou (Dt),
. l'on utilise un mandrin dont la tige (8) présente un diamètre externe (Dm) supérieur à l'alésage (Da) de la douille en vue d'engendrer un gonflement de la douille lors de l'introduction du mandrin et une pression radiale entre douille et matériaux à assembler.

9. Procédé d'assemblage selon l'une des revendications précédentes, caractérisé en ce que l'on utilise une douille (1) de longueur ajustée de sorte que son extrémité tubulaire dépasse des matériaux à assembler d'une longueur telle que l'extrémité libre vienne sensiblement affleurer la bordure externe de la fraisure (15) en fin de pliage.

10. Procédé d'assemblage selon l'une des revendications précédentes, caractérisé en ce que :
. l'on réalise dans les matériaux un trou (13) possédant, d'un côté, la fraisure (15) précitée et, de l'autre côté, une fraisure (14) analogue pour l'insertion d'une tête préformée,
. l'on utilise une douille (1) possédant une tête préformée (3) de forme adaptée pour se loger dans la fraisure correspondante (14).

11. Procédé d'assemblage selon la revendication 10, caractérisé en ce que :
. l'on utilise une douille (1) dont la tête préformée (3) présente une petite fraisure (6a) sur sa face frontale autour de son âme creuse,
. l'on utilise un mandrin (2) de longueur ajustée pour dépasser de la naissance de la petite fraisure (6a) de la douille en fin d'introduction,
. l'on sertit le mandrin (2) dans la douille (1) en écrasant au moyen d'un poinçon (18) la partie dépassante (8a) du mandrin afin de l'amener à fluer dans la petite fraisure de la douille.

12. Organe de rivetage permettant la mise en oeuvre du procédé conforme à l'une des revendications 1 à 11, comprenant, d'une part, un mandrin (2) possédant une tige (8) et une tête (9), d'autre part, une douille (1) adaptée pour contenir la tige de mandrin et possédant une extrémité tubulaire apte à être déformée par la tête de mandrin, la douille (1) possédant une extrémité tubulaire dotée sur sa surface externe d'un décrochement périphérique (5) formant une zone de pliage prolongée vers l'extrémité libre par une zone d'accostage (5b, 7), le mandrin possédant une tête (9) dotée d'une sous-face (9a) de diamètre décroissant en direction de la tige, apte à déformer l'extrémité tubulaire de la douille et à replier celle-ci au niveau de sa zone de pliage, le diamètre externe du mandrin (Dm) étant ajusté de façon à excéder l'alésage (Da) de la douille d'une valeur comprise entre 0,05 mm et 0,3 mm.

13. Organe de rivetage selon la revendication 12, dans lequel :
. la tête de mandrin (9) présente une sous-face (9a) de forme tronconique se raccordant à la tige par un arrondi (9b),
. l'extrémité tubulaire de la douille possède une âme creuse (6) pourvue d'un tronçon tronconique (6b) s'étendant jusqu'au niveau de sa zone de pliage, l'angle de conicité (β) de ce tronçon étant inférieur à celui de la sous-face (9a) de tête de mandrin,
. la zone d'accostage (5b, 7) de la douille est au moins en partie cylindrique et/ou tronconique.

14. Organe de rivetage selon la revendication 13, dans lequel :
. le mandrin possède une tête (9) dont la sous-face (9a) présente un angle de conicité (δ) de l'ordre de 135°,
. la douille possède une âme creuse (6) dont le tronçon tronconique (6b) présente un angle de conicité (β) de l'ordre de 15°.

15. Organe de rivetage selon l'une des revendications 12, 13 ou 14, dans lequel le décrochement de la douille est constitué par une gorge périphérique (5).

16. Organe de rivetage selon l'une des revendications 12, 13, 14, ou 15, dans lequel la douille (1) possède une tête préformée (3) à l'opposé de l'extrémité tubulaire précitée.

17. Organe de rivetage selon la revendication 16, dans lequel :
. le mandrin (2) présente une longueur ajustée pour dépasser de la tête préformée (9a) de douille en fin d'introduction dans celle-ci,
. la douille (1) possède une tête préformée (3) présentant une petite fraisure (6a) sur sa face frontale autour de son âme creuse.

18. Organe de rivetage selon l'une des revendications 12 à 17, dans lequel le mandrin (2) est en acier inoxydable et la douille (1) en titane.

## Claims

1. Method for assembling materials with the aid of a riveting device of the type comprising, on the one hand, a mandrel (2) possessing a shaft (8) and a head (9) and, on the other hand, a socket (1) so designed as to accommodate the shaft of the mandrel and having a tubular end capable of being deformed by the head of the mandrel so as to constitute, on one side of the materials to be assembled, a post-formed head, said assembly method being characterised in that it consists:
. in producing in the materials to be assembled a hole (13) comprising, on at least one side of said materials, a countersunk opening (15),
. in making use of a socket (1), the tubular end of which is endowed on its outer surface with a retracted peripheral section (5) which forms a bending zone extended by an abutment zone (5b, 7) towards the free end of the socket, said retracted peripheral section being positioned along the socket so as to disengage the origin of the countersunk opening (15) of the hole when the socket is driven into said hole,
. in making use of a mandrel (2) the head (9) of which is endowed with an underface (9a) with a diameter decreasing in the direction of the shaft, capable of deforming the tubular end of the socket and of bending back the latter at the level of its bending zone,
. in introducing the socket (1) into the hole (13) so that its tubular end provided with the retracted peripheral section (5) is situated at the side of the countersunk opening (15), whereby the bending zone extends on either side of the origin of said countersunk opening, said socket being introduced into the hole by itself in the absence of the mandrel,
. in maintaining the socket (1) in the hole (13) by means of a hollow plunger (16) so located as to rest against said socket on the side opposite the aforementioned countersunk hole (15),
. in then presenting the mandrel on that side of the materials which is provided with the countersunk opening (15) opposite the tubular end of the socket endowed with the retracted peripheral section,
. in introducing and driving the mandrel (2) into the socket (1) through the tubular end of the latter,
. in applying by means of a dolly (17) a pressure to the head of the mandrel so as to cause said head to deform the tubular end of the socket, whereby the underface (9a) of said head ensures centrifugal bending-back of the end of the socket so as to bring the abutment surface of the latter at least partly into contact with the materials inside the countersunk opening (15),
. in upsetting the mandrel (2) within the socket (1).

2. Method of assembly according to Claim 1, in which use is made of a mandrel, the head (9) of which is endowed with an underface (9a) of truncated form joined to the shaft by a rounded section (9b), the angle of taper (δ) of said underface being larger than the angle of taper of the countersunk opening of the hole.

3. Method of assembly according to one of Claims 1 or 2, in which use is made of a socket, the tubular end of which has a hollow core (6) provided with a section of truncated form (6b) extending up to the level of the bending zone (5).

4. Method of assembly according to one of Claims 1, 2 or 3, in which use is made of a socket having an at least partly cylindrical abutment zone (7).

5. Method of assembly according to one of Claims 1, 2, 3 or 4, in which use is made of a socket (1), the retracted section of which is formed by a peripheral recess (5).

6. Method of assembly according to Claim 5, characterised in that use is made of a socket having an abutment zone (5b) of at least partly truncated form constituted by the end flank of the peripheral recess (5).

7. Method of assembly combining the characteristics of Claims 2 and 3, in which:
. a hole (13) is produced in the materials, the countersunk opening (15) of which has an angle of taper (η) of the order of 100°,
. use is made of a socket, the hollow core (6) of which has a truncated section (6b) the angle of taper (β) of which is of the order of 15°,
. use is made of a mandrel, the head (9) of which has an underface (9a), the angle of taper (δ) of which is of the order of 135°.

8. Method of assembly according to one of the preceding claims characterised in that:
. use is made of a socket (1), the outer cylindrical diameter (Dd) of which corresponds substantially to the inner diameter (Dt) of the hole,
. use is made of a mandrel, the shaft (8) of which has an outer diameter (Dm) larger than the inner diameter (Da) of the socket with a view to distending the socket when the mandrel is introduced and applying a radial pressure between the socket and the materials to be assembled.

9. Method of assembly according to one of the preceding claims, characterised in that use is made of the socket (1), the length of which is so adjusted that its tubular end projects from the materials to be assembled by a length such that at the end of the bending operation the free end comes to be substantially flush with the outer edge of the countersunk opening (15).

10. Method of assembly according to one of the preceding claims, characterised in that:
. a hole (13) is produced in the materials, said hole having on one side the aforementioned countersunk opening (15) and on the other side an analogous countersunk opening (14) for the insertion of a preformed head,
. use is made of a socket (1) having a preformed head (3) of a form capable of being located within the corresponding countersunk opening (14).

11. Method of assembly according to Claim 10 characterised in that:
. use is made of a socket (1), the preformed head (3) of which has on its front face around its hollow core a small countersunk opening (6a),
. use is made of a mandrel (2) with a length so adjusted as to project, at the end of the inserting operation, beyond the origin of the small countersunk opening (6a) of the socket,
. the mandrel (2) is upset in the socket (1) by crushing the projecting part (8a) of the mandrel with a punch (18) so as to cause flow of said part within the small countersunk opening of the socket.

12. Riveting device enabling the implementation of the method according to one of Claims 1 to 11, comprising, on the one hand, a mandrel (2) having a shaft (8) and a head (9), and on the other hand, a socket (1) so designed as to accommodate the shaft of the mandrel and having a tubular end capable of being deformed by the head of the mandrel, whereby the socket (1) has a tubular end endowed on its outer surface with a retracted peripheral section (5) forming a bending zone extended by an abutment zone (5b, 7) towards the free end, the mandrel having a head (9) endowed with an underface (9a) with a diameter decreasing in the direction of the shaft and capable of deforming the tubular end of the socket and bending the latter back at the level of its bending zone, the outer diameter of the shaft (Dm) being so adjusted as to exceed the inner diameter (Da) of the socket by a value between 0.05 mm and 0.3 mm.

13. Riveting device according to Claim 12, in which:
. the mandrel head (9) has an underface (9a) of truncated form joined to the shaft by a rounded section (9b),
. the tubular end of the socket has a hollow core (6) provided with a section (6b) of truncated form extending up to the level of its bending zone, the angle of taper (β) of said section being smaller than the angle of taper of the underface (9a) of the mandrel head,
. the abutment zone (5b, 7) of the socket is at least partly cylindrical and/or of truncated form.

14. Riveting device according to Claim 13 in which:
. the mandrel has a head (9), the underface (9a) of which has an angle of taper (δ) of the order of 135°,
. the socket has a hollow core (6), the truncated section (6b) of which has an angle of taper (β) of the order of 15°.

15. Riveting device according to one of Claims 12, 13 or 14, in which the retracted section of the socket is constituted by a peripheral recess (5).

16. Riveting device according to one of Claims 12, 13, 14 or 15 in which the socket (1) has a preformed head (3) opposite the aforementioned tubular end.

17. Riveting device according to Claim 16, in which:
. the mandrel (2) has a length so adjusted as to project from the preformed head (3) of the socket after it has been introduced into the latter,
. the socket (1) has a preformed head (3) having a small countersunk opening (6a) on its front face around its hollow core.

18. Riveting device according to one of Claims 12 to 17, in which the mandrel (2) consists of stainless steel and the socket (1) of titanium.

## Patentansprüche

1. Verfahren zum Verbinden von Materialien mit Hilfe einer Nietvorrichtung der Art, die einerseits einen Dorn (2) mit einem Schaft (8) und einem Kopf (9) und andererseits eine Hülse (1) umfaßt, die so beschaffen ist, daß sie den Schaft des Dornes aufnimmt, und die mit einem rohrförmigen Ende versehen ist, das sich durch den Kopf des Dornes verformen läßt, um an einer Seite der zu verbindenden Materialien einen nachgeformten Kopf zu bilden, und zwar ist das besagte Verbindungsverfahren dadurch gekennzeichnet, daß es in den folgenden Stufen besteht:
. im Herstellen in den zu verbindenden Materialien eines Loches (13) mit einem Senkloch (15) an mindestens einer Seite der besagten Materialien,
. im Gebrauch einer Hülse (1), deren rohrförmiges Ende an ihrer äußeren Oberfläche mit einer peripheren Einbuchtung (5) versehen ist, welche eine durch eine Anliegezone (5b, 7) auf das freie Ende der Hülse zu verlängerte Biegezone bildet, wobei die besagte periphere Einbuchtung entlang der Hülse so angeordnet ist, daß sie den Ursprung des Senklochs (15) des Loches, wenn die Hülse in dem besagten Loch eingepreßt ist, freigibt,
. im Gebrauch eines Dornes (2), dessen Kopf (9) mit einer Unterfläche (9a) versehen ist, deren Durchmesser in Richtung des Schaftes abnimmt, und der in der Lage ist, das rohrförmige Ende der Hülse zu verformen und im Bereiche ihrer Biegezone zurückzubiegen,
. im Einführen der Hülse (1) in das Loch (13), so daß sich deren mit der peripheren Einbuchtung (5) versehenes rohrförmiges Ende an der Seite des Senkloches (15) befindet, wobei sich die Biegezone zu beiden Seiten des Ursprungs des besagten Senkloches erstreckt, und zwar wird die besagte Hülse in Abwesenheit des Dornes allein in das Loch eingeführt,
. im Erhalten der Hülse (1) innerhalb des Loches (13) mit Hilfe eines Hohlkolbens (16), der die besagte Hülse an der dem vorstehend genannten Senkloch (15) gegenüberliegenden Seite abstützt,
. im danach Zuführen des Dornes an der das Senkloch (15) enthaltenden Seite der Materialien, und zwar dem rohrförmigen mit der peripheren Einbuchtung versehenen Ende der Hülse gegenüber,
. im Einführen und Einpressen des Dornes (2) in die Hülse (1) durch das rohrförmige Ende der besagten Hülse,
. im Ausüben mit Hilfe eines Niethammers (17) eines Druckes auf den Kopf des Dornes, um zu bewirken, daß der besagte Kopf das rohrförmige Ende der Hülse verformt, wobei die Unterfläche (9a) des besagten Kopfes zentrifugales Zurückbiegen des Hülsenendes gewährleistet, so daß die Anliegefläche der besagten Hülse mindestens teilweise mit den innerhalb des Senkloches (15) befindlichen Materialien in Kontakt gebracht wird,
. im Stauchen des Dornes (2) in der Hülse (1).

2. Verbindungsverfahren nach Anspruch 1, bei dem von einem Dorn Gebrauch gemacht wird, dessen Kopf (9) mit einer kegelstumpfförmigen Unterfläche (9a) versehen ist, die über eine Rundung (9b) an den Schaft anschließt, wobei der Kegelwinkel (δ) der besagten Unterfläche größer ist als der Kegelwinkel des Senkloches des Loches.

3. Verbindungsverfahren nach einem der Ansprüche 1 oder 2, bei dem von einer Hülse Gebrauch gemacht wird, deren rohrförmiges Ende einen Hohlkern (6) mit einem kegelstumpfförmigen Abschnitt (6b) aufweist, der sich bis in Höhe der Biegezone (5) erstreckt.

4. Verbindungsverfahren nach einem der Ansprüche 1, 2 oder 3, bei dem von einer Hülse Gebrauch gemacht wird, die eine mindestens teilweise zylindrische Anliegezone (7) aufweist.

5. Verbindungsverfahren nach einem der Ansprüche 1, 2, 3 oder 4, bei dem von einer Hülse (1) Gebrauch gemacht wird, bei der eine periphere Aussparung (5) die Einbuchtung bildet.

6. Verbindungsverfahren nach Anspruch 5, dadurch gekennzeichnet, daß von einer Hülse mit einer mindestens teilweise kegelstumpfförmigen Anliegezone (5b) Gebrauch gemacht wird, die durch die Endflanke der peripheren Aussparung (5) gebildet wird.

7. Verbindungsverfahren mit den Kennzeichen der Ansprüche 2 und 3,
. bei dem in den Materialien ein Loch (13) angefertigt wird, dessen Senkloch (15) einen Kegelwinkel (η) im Bereiche von 100° aufweist,
. bei dem von einer Hülse Gebrauch gemacht wird, deren Hohlkern (6) einen kegelförmigen Abschnitt (6b) mit einem Kegelwinkel (β) im Bereiche von 15° aufweist,
. bei dem von einem Dorn Gebrauch gemacht wird, dessen Kopf (9) eine Unterfläche (9a) mit einem Kegelwinkel (δ) im Bereiche von 135° aufweist.

8. Verbindungsverfahren nach einem der vorstehenden Ansprüche, dadurch gekennzeichnet,
. daß von einer Hülse (1) Gebrauch gemacht wird, deren zylindrischer Außendurchmesser (Dd) im wesentlichen dem Innendurchmesser (Dt) des Loches entspricht,
. daß von einem Dorn Gebrauch gemacht wird, dessen Schaft (8) einen Außendurchmesser (Dm) aufweist, der größer ist als der Innendurchmesser (Da) der Hülse, um eine Aufweitung der Hülse beim Einführen des Dornes und einen radialen Druck zwischen der Hülse und den zu verbindenden Materialien zu bewirken.

9. Verbindungsverfahren nach einem der vorstehenden Ansprüche, dadurch gekennzeichnet, daß von einer Hülse (1) Gebrauch gemacht wird, deren Länge so bemessen ist, daß ihr rohrförmiges Ende über die zu verbindenden Materialien hinausragt, und zwar um eine Länge, die so beschaffen ist, daß sein freies Ende bei Abschluß des Biegevorgangs im wesentlichen mit dem Außenrand des Senkloches (15) fluchtet.

10. Verbindungsverfahren nach einem der vorstehenden Ansprüche, dadurch gekennzeichnet,
. daß in den Materialien ein Loch (13) angefertigt wird, das an der einen Seite das vorstehend genannte Senkloch (15) und an der anderen Seite ein entsprechendes Senkloch (14) zum Einführen eines vorgeformten Kopfes aufweist,
. daß von einer Hülse (1) mit einem vorgeformten Kopf (3) Gebrauch gemacht wird, dessen Form so beschaffen ist, daß er in dem entsprechenden Senkloch (14) Aufnahme findet.

11. Verbindungsverfahren nach Anspruch 10, dadurch gekennzeichnet,
. daß von einer Hülse (1) Gebrauch gemacht wird, deren vorgeformter Kopf (3) an deren Stirnfläche rings um ihren Hohlkern ein kleines Senkloch (6a) aufweist,
. daß von einem Dorn (2) Gebrauch gemacht wird, dessen Länge so bemessen ist, daß er bei Abschluß des Einführungsvorgangs über den Ursprung des kleinen Senklochs (6a) der Hülse hinausragt,
. daß man den Dorn (2) in der Hülse (1) staucht, indem man den vorstehenden Teil (8a) des Dornes mit Hilfe eines Stempels (18) quetscht, um Fließen des Dornwerkstoffs innerhalb des kleinen Senklochs der Hülse zu bewirken.

12. Die Durchführung des Verfahrens nach einem der Ansprüche 1 bis 11 ermöglichende Nietvorrichtung, umfassend einerseits einen Dorn (2) mit einem Schaft (8) und einem Kopf (9) und andererseits eine Hülse (1), die so beschaffen ist, daß sie den Schaft des Dornes aufnimmt, und die ein rohrförmiges Ende aufweist, das sich durch den Kopf des Dornes verformen läßt, und zwar weist die Hülse (1) ein rohrförmiges Ende auf, das an seiner Außenfläche mit einer eine durch eine Anliegezone (5b, 7) auf das freie Ende zu verlängerte Biegezone bildenden peripheren Einbuchtung (5) versehen ist, wobei der Dorn einen Kopf (9) mit einer Unterfläche (9a) aufweist, dessen Durchmesser in Richtung des Schaftes abnimmt und der in der Lage ist, das rohrförmige Ende der Hülse zu verformen und letzteres im Bereiche ihrer Biegezone zurückzubiegen, während der Außendurchmesser (Dm) des Dornes so bemessen ist, daß er den Innendurchmesser (Da) der Hülse um einen Wert zwischen 0,05 mm und 0,3 mm übersteigt.

13. Nietvorrichtung nach Anspruch 12,
. bei der der Kopf (9) des Dornes eine kegelstumpfförmige Unterfläche (9a) aufweist, die an den Schaft über einer Rundung (9b) anschließt,
. bei der das rohrförmige Ende der Hülse einen Hohlkern (6) mit einem sich bis zu dem Bereich ihrer Biegezone erstreckenden kegelstumpfförmigen Abschnitt (6b) aufweist, wobei der Kegelwinkel (β) des besagten Abschnitts kleiner ist als der Kegelwinkel der Unterfläche (9a) des Dornkopfes,
. bei der die Anliegezone (5b, 7) der Hülse mindestens teilweise zylindrisch und/oder kegelstumpfförmig ist.

14. Nietvorrichtung nach Anspruch 13,
. bei der der Dorn einen Kopf (9) besitzt, dessen Unterfläche (9a) einen Kegelwinkel (δ) im Bereiche von 135° aufweist,
. bei dem die Hülse einen Hohlkern (6) besitzt, dessen kegelstumpfförmiger Abschnitt (6b) einen Kegelwinkel (β) im Bereiche von 15° aufweist.

15. Nietvorrichtung nach einem der Ansprüche 12, 13 oder 14, bei der die Einbuchtung der Hülse in einer peripheren Aussparung (5) besteht.

16. Nietvorrichtung nach einem der Ansprüche 12, 13, 14 oder 15, bei der die Hülse (1) dem vorstehend genannten rohrförmigen Ende gegenüber einen vorgeformten Kopf (3) aufweist.

17. Nietvorrichtung nach Anspruch 16,
. bei der der Dorn (2) eine Länge hat, die so bemessen ist, daß sie bei Abschluß der Einführung in die besagte Hülse aus dem vorgeformten Kopf (3) der Hülse herausragt,
. bei der die Hülse (1) einen vorgeformten Kopf (3) mit einem kleinen Senkloch (6a) an ihrer Stirnfläche rings um ihren Hohlkern aufweist.

18. Nietvorrichtung nach einem der Ansprüche 12 bis 17, bei der der Dorn (2) aus rostfreiem Stahl und die Hülse (1) aus Titan besteht.
